# EUROPÄISCHE PATENTSCHRIFT

(11) **EP 2 978 963 B1**
(45) Veröffentlichungstag und Bekanntmachung des Hinweises auf die Patenterteilung: **20.06.2018**
(21) Anmeldenummer: 14712660.1
(22) Anmeldetag: 25.03.2014
(51) Int. Cl.: F02M 35/10, F02B 29/04, F28F 9/00, F28F 9/02

(54) **FRISCHLUFTANLAGE**
AIR SUPPLY SYSTEM
INSTALLATION DE CIRCULATION D'AIR FRAIS

(30) Priorität: 26.03.2013 DE 102013205316
(43) Veröffentlichungstag der Anmeldung: 03.02.2016
(73) Patentinhaber: Mahle International GmbH, 70376 Stuttgart (DE); MAHLE Behr GmbH & Co. KG, 70469 Stuttgart (DE)
(72) Erfinder: BRUGGESSER, Veit, 71157 Hildrizhausen (DE); EILEMANN, Andreas, 71729 Erdmannhausen (DE); GRASS, Uwe, 70569 Stuttgart (DE); MÜLLER, Rolf, 71711 Steinheim/Murr (DE); POMIN, Hubert, 71069 Sindelfingen (DE); SAUMWEBER, Christian, 70378 Stuttgart (DE); STEHLIG, Juergen, 72654 Neckartenzlingen (DE)
(74) Vertreter: BRP Renaud & Partner mbB Rechtsanwälte Patentanwälte Steuerberater
(86) Internationale Anmeldenummer: PCT/EP2014/055939
(87) Internationale Veröffentlichungsnummer: WO 2014/154678

(56) Entgegenhaltungen:
- EP-A1- 2 014 892
- WO-A1-2009/003562
- WO-A1-2010/102947
- WO-A1-2011/023516
- WO-A1-2012/085008
- WO-A1-2012/159730
- FR-A1- 2 645 209

## Beschreibung

Die vorliegende Erfindung betrifft eine Frischluftanlage zur Versorgung von Brennräumen einer aufgeladenen Brennkraftmaschine mit Frischluft, insbesondere in einem Kraftfahrzeug.

Eine derartige Frischluftanlage umfasst üblicherweise ein Gehäuse, durch das ein Frischluftpfad hindurchführt. Bei einer aufgeladenen Brennkraftmaschine ist es üblich, die aufgeladene Frischluft, also die Ladeluft, vor dem Eintritt in die Brennräume zu kühlen. Hierzu kann eine derartige Frischluftanlage mit einem Ladeluftkühler ausgestattet sein, der von der Frischluft durchströmbar ist und der im Frischluftpfad angeordnet ist. Dabei kann der Ladeluftkühler auf unterschiedliche Weise in das Gehäuse der Frischluftanlage eingesetzt sein. Denkbar ist grundsätzlich eine Einschublösung, bei welcher der Ladeluftkühler seitlich, also quer zur Strömungsrichtung, in das Gehäuse eingeschoben bzw. eingesetzt wird. Hierzu kann das Gehäuse eine seitliche Einführöffnung aufweisen, durch die der Ladeluftkühler quer zum Frischluftpfad seitlich in das Gehäuse einsetzbar ist. Bei einer derartigen Einschublösung kann die Einführöffnung beispielsweise mit einem äußeren Endbereich des Ladeluftkühlers verschlossen werden, der gleichzeitig Anschlüsse zum Zuführen und Abführen eines Kühlmittels aufweist. Um eine hinreichende Fixierung des Ladeluftkühlers am Gehäuse im Bereich der Einführöffnung zu realisieren und um eine hinreichende Abdichtung zwischen Ladeluftkühler und Gehäuse im Bereich der Einführöffnung zu erreichen, kann ein vergleichsweise großer Aufwand betrieben werden. Eine gattungsgemäße Frischluftanlage ist aus der WO2012/085008A1 bekannt geworden. Die vorliegende Erfindung beschäftigt sich mit dem Problem, für eine Frischluftanlage der eingangs genannten Art eine verbesserte Ausführungsform anzugeben, die sich insbesondere durch eine preiswerte Herstellbarkeit auszeichnet. Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den äußeren Endbereich des Ladeluftkühlers und das Gehäuse im Bereich der Einführöffnung so auszugestalten, dass der Ladeluftkühler im Bereich der Einführöffnung unmittelbar mit dem Gehäuse verrastet werden kann. Mit Hilfe einer derartigen Verrastung lässt sich der Ladeluftkühler besonders einfach am Gehäuse montieren. Insbesondere kann eine derartige Verrastung als ausschließliche Befestigung des Ladeluftkühlers am Gehäuse im Bereich der Einführöffnung dienen, so dass auf zusätzliche Befestigungsmittel verzichtet werden kann.

Entsprechend einer vorteilhaften Ausführungsform kann der Ladeluftkühler Rastelemente aufweisen, die mit dazu komplementären Gegenrastelementen zusammenwirken, die das Gehäuse aufweist. Ladeluftkühler und Gehäuse besitzen somit aufeinander abgestimmte Rastmittel, um die Verrastung zwischen Ladeluftkühler und Gehäuse zu realisieren.

Entsprechend einer vorteilhaften Weiterbildung können die Rastelemente integral am Ladeluftkühler ausgeformt sein. Hierdurch ergibt sich eine besonders preiswerte Realisierung der Verrastung, da auf separate Rastelemente, die am Ladeluftkühler montiert werden müssen, verzichtet werden kann.

Bei einer anderen Weiterbildung können die Gegenrastelemente integral am Gehäuse ausgeformt sein. Auch diese Maßnahme führt zu einer preiswerten Realisierung der Verrastung, da insbesondere auf separate Gegenrastelemente verzichtet werden kann, die am Gehäuse montiert werden müssten. Insbesondere kann das Gehäuse dabei aus einem Kunststoff hergestellt sein, vorzugsweise mittels Spritzgusstechnik. Somit lassen sich die Gegenrastelemente formintegriert mit dem Gehäuse spritzformen.

Bei einer anderen vorteilhaften Weiterbildung können die Rastelemente durch Rasthaken gebildet sein, während die Gegenrastelemente durch Rastkonturen gebildet sind, mit denen die Rasthaken in Eingriff stehen. Derartige Rastkonturen können dabei einen Hinterschnitt bilden, also ein Eingreifen oder Übergreifen des jeweiligen Rasthakens an einer von der Einführrichtung abgewandten Eingriffszone. Durch den Eingriff zwischen Rasthaken und Rastkontur ergibt sich eine formschlüssige Verbindung, die entgegen der Einführrichtung auf Zug belastbar ist. Die Rasthaken können zweckmäßig quer zur Einführrichtung federelastisch konzipiert sein, wodurch sich die Montage bzw. die Verrastung beim Montieren vereinfacht.

Entsprechend einer alternativen Ausführungsform können die Rastelemente durch Rastkonturen gebildet sein, während die Gegenrastelemente durch Rasthaken gebildet sind, die mit den Rastkonturen in Eingriff stehen. Auch hier ergeben sich wieder die gleichen Vorteile, wie insbesondere die Ausbildung von Hinterschnitten und die Ausbildung von auf Zug belastbaren Formschlussverbindungen. Auch hier können die Rasthaken wieder quer zur Einführrichtung federelastisch ausgestaltet sein. Erfindungsgemäß weist der äußere Endbereich wenigstens einen umlaufenden Kontaktbereich auf, der einem um die Einführöffnung umlaufenden Anlagebereich parallel zur Einführrichtung bzw. in der Einführrichtung gegenüber liegt. Hierdurch wird ein definiertes Zusammenwirken zwischen Gehäuse und Ladeluftkühler ermöglicht.

Gemäß einer Weiterbildung kann der jeweilige Kontaktbereich unmittelbar am zugehörigen Anlagebereich anliegen. Durch die Kontaktierung zwischen Kontaktbereich und Anlagebereich ergibt sich eine vorbestimmte Relativlage zwischen dem Ladeluftkühler und dem Gehäuse, wodurch eine reproduzierbare Positionierung des Ladeluftkühlers im Gehäuse erreicht werden kann. Erfindungsgemäß ist zwischen dem Gehäuse und dem äußeren Endbereich zumindest eine um die Einführöffnung umlaufende Dichtung angeordnet. Mit Hilfe einer derartigen Dichtung kann ein Luftaustritt aus dem Gehäuse durch die Einführöffnung vermieden werden. Erfindungsgemäß ist der jeweilige Kontaktbereich in der Einführrichtung vom zugehörigen Anlagebereich beabstandet, so dass in der Einführrichtung zwischen dem jeweiligen Kontaktbereich und dem zugehörigen Anlagebereich eine Lücke ausgebildet ist, die von der jeweiligen Dichtung überbrückt ist, wodurch sich eine elastische Abstützung zwischen Gehäuse und Ladeluftkühler ergibt. Eine derartige elastische Abstützung kann eine Schwingungsentkopplung zwischen dem Gehäuse und dem Ladeluftkühler bewirken, um die mechanische Belastung des Ladeluftkühlers zu reduzieren. Durch die Lücke vereinfacht sich außerdem die Montage. Ferner können thermisch bedingte Relativbewegungen zwischen Ladeluftkühler und Gehäuse von der jeweiligen Dichtung elatisch aufgenommen werden, was thermisch bedingte Spannugen reduziert. Schließlich kann die jeweilige Dichtung auch Herstellungstoleranzen besser ausgleichen.

Bei einer einfachen Weiterbildung kann vorgesehen sein, dass der Ladeluftkühler über eine solche Dichtung nur in der Einführrichtung elastisch am Gehäuse abgestützt ist. Entgegen der Einführrichtung kann dann eine direkte Kontaktierung zwischen Bestandteilen des Ladeluftkühlers und Bestandteilen des Gehäuses vorliegen. Beispielsweise kann die Verrastung einen unmittelbaren Kontakt zwischen einer Rastkontur des Ladeluftkühlers und federelastischen Rastelementen des Gehäuses bewirken. Jedenfalls kann auch bei dieser einfachen Bauform eine gewisse Schwingungsentkopplung erreicht werden.

Gemäß einer bevorzugten alternativen Weiterbildung kann dagegen vorgesehen sein, dass zum einen der Ladeluftkühler über eine erste solche Dichtung in der Einführrichtung elastisch am Gehäuse abgestützt ist und dass zum anderen der Ladeluftkühler über eine zweite solche Dichtung entgegen der Einführrichtung elastisch am Gehäuse abgestützt ist. Hierdurch wird eine besonders effiziente Schwingungsentkopplung erreicht.

Bei einer anderen Weiterbildung kann die erste Dichtung in einem ersten Paar aus Kontaktbereich und Anlagebereich angeordnet sein, während die zweite Dichtung in einem vom ersten Paar parallel zur Einführrichtung beabstandeten zweiten Paar aus Kontaktbereich und Anlagebereich angeordnet ist. Hierdurch vereinfacht sich die Montage. Ferner kann optional vorgesehen sein, die erste Dichtung und die zweite Dichtung bezüglich der Einführrichtung konzentrisch ineinander anzuordnen.

Besonders zweckmäßig ist eine Weiterbildung, bei welcher die jeweilige Dichtung im Bereich des jeweiligen Kontaktbereichs in eine bezüglich der Einführöffnung umlaufende Dichtungsnut eingesetzt ist, die im jeweiligen Kontaktbereich und/oder im jeweiligen Anlagebereich ausgebildet ist. Die Anordnung der jeweiligen Dichtung im Kontaktbereich ist besonders zweckmäßig, da sowohl der Kontaktbereich als auch der Anlagebereich um die Einführöffnung umlaufen, so dass in diesem Bereich eine effiziente Axialdichtung, also eine parallel zur Einführrichtung wirkende Dichtung realisierbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, der durch die nachstehenden Ansprüche definiert ist. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Brennkraftmaschine mit einer Frischluftanlage, die einen Ladeluftkühler enthält,
- Fig. 2: ein stark vereinfachter Längsschnitt der Frischluftanlage im Bereich einer Einführöffnung zum Einführen des Ladeluftkühlers in die Frischluftanlage,
- Fig. 3: eine Schnittansicht wie in Fig. 2, jedoch bei einem anderen Beispiel,

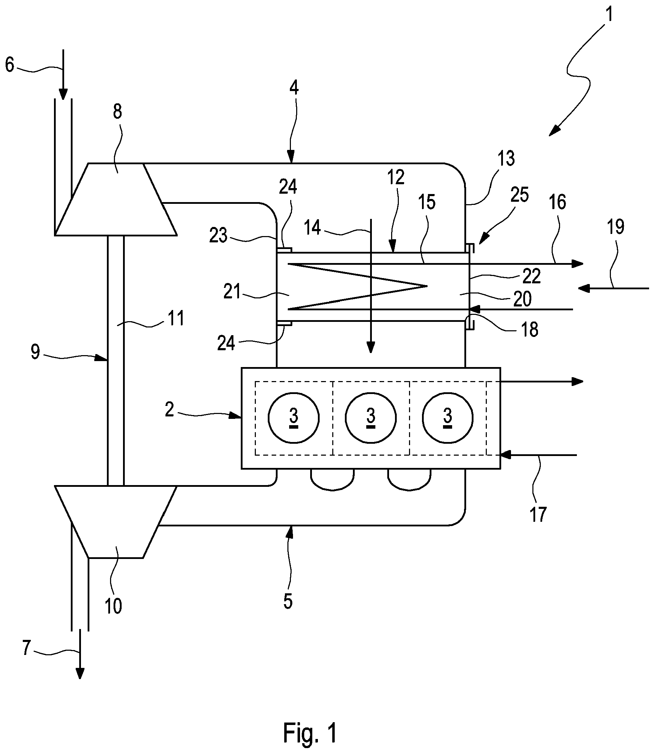

- Fig. 4: eine erfindungsgemäße Variante des in Fig. 2 gezeigten Beispiels,
- Fig. 5: eine erfindungsgemäße Variante des in Fig. 3 gezeigten Beispiels.
Entsprechend Fig. 1 umfasst eine Brennkraftmaschine 1 einen Motorblock 2, in dem mehrere Brennräume 3 angeordnet sind. Die Brennräume 3 sind dabei durch Zylinder gebildet, in denen Kolben hubverstellbar angeordnet sind. Die Brennkraftmaschine 1 umfasst ferner eine Frischluftanlage 4 zum Zuführen von Frischluft zu den Brennräumen 3 sowie eine Abgasanlage 5 zum Abführen von Abgas von den Brennräumen 3. Ein entsprechender Frischluftstrom 6 ist in Fig. 1 durch einen Pfeil angedeutet. Ein entsprechender Abgasstrom 7 ist in Fig. 1 durch einen Pfeil angedeutet. Die Brennkraftmaschine 1 ist hier als aufgeladene Brennkraftmaschine 1 konfiguriert. Hierzu ist die Brennkraftmaschine 1 mit einer entsprechenden Ladeeinrichtung ausgestattet, die hier durch einen Verdichter 8 eines Abgasturboladers 9 gebildet ist. Der Verdichter 8 ist hierzu in der Frischluftanlage 4 angeordnet. Der Verdichter 8 bzw. ein hier nicht näher dargestelltes Verdichterrad ist beim Abgasturbolader 9 mit Hilfe einer Turbine 10 bzw. mit einem hier nicht dargestellten Turbinenrad angetrieben, wozu Verdichter 8 und Turbine 10 mit einer gemeinsamen Welle 11 antriebsverbunden sind. Die Turbine 10 ist in der Abgasanlage 5 angeordnet.

Es ist klar, dass die Frischluftanlage 4 weitere Komponenten, wie z.B. eine Drosseleinrichtung sowie ein Frischluftfilter, enthalten kann. Ferner ist klar, dass auch die Abgasanlage 5 weitere Komponenten, wie z.B. ein Partikelfilter, einen Katalysator und einen Schalldämpfer, enthalten kann.

Die mit Hilfe des Verdichters 8 komprimierte Luft wird durch ihre Verdichtung gleichzeitig erwärmt. Um die Ladeluft wieder kühlen zu können, ist in der Frischluftanlage 4 ein Ladeluftkühler 12 angeordnet, und zwar stromab des Verdichters 8. Zur Unterbringung des Ladeluftkühlers 12 weist die Frischluftanlage 4 ein Gehäuse 13 auf, durch das ein Frischluftpfad 14 hindurchführt, der in Fig. 1 durch einen Pfeil symbolisiert ist. Der Ladeluftkühler 12 ist nun im Gehäuse 13 so angeordnet, dass der Frischluftpfad 14 durch den Ladeluftkühler 12 hindurchführt. Dementsprechend ist der Ladeluftkühler 12 von der Frischluft durchströmbar. Der Ladeluftkühler 12 erhält außerdem einen Kühlmittelpfad 15, der auf geeignete Weise mit dem Frischluftpfad 14 wärmeübertragend, jedoch mediengetrennt gekoppelt ist. Der Kühlmittelpfad 15 kann an einen Ladeluftkühlkreis 16 angeschlossen sein. Dieser Ladeluftkühlkreis 16 kann wärmeübertragend mit einem Motorkühlkreis 17 gekoppelt sein, der zur Kühlung des Motorblocks 2 dient. Ebenso kann es sich beim Ladeluftkühlkreis 16 und beim Motorkühlkreis 17 um separate Kühlkreise handeln.

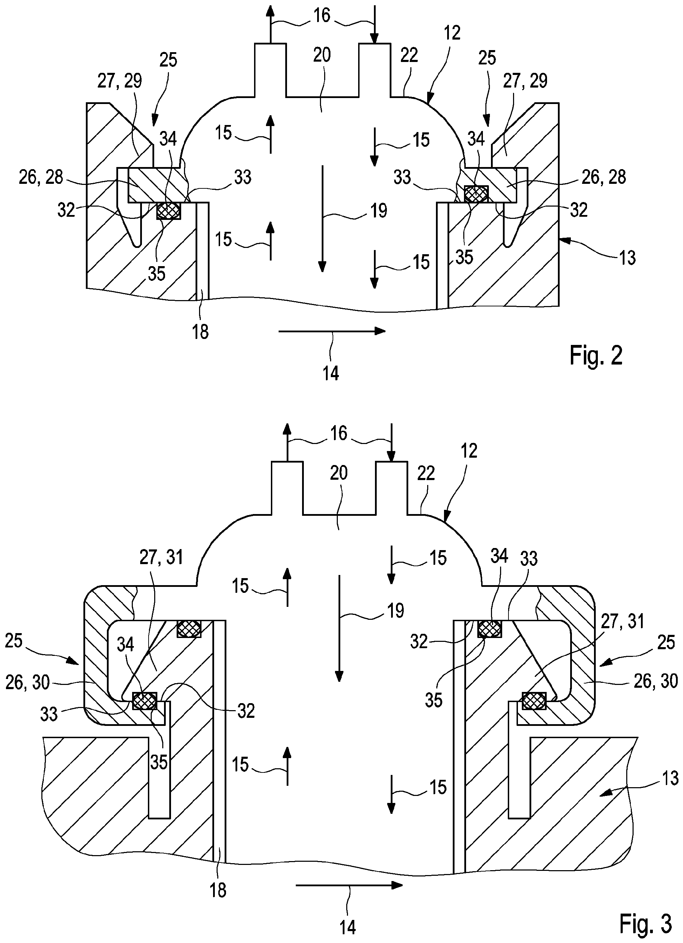

Entsprechend den Figuren 1 bis 5 umfasst das Gehäuse 13 eine Einführöffnung 18, durch die der Ladeluftkühler 12 in einer Einführrichtung 19 oder Einschubrichtung 19 seitlich in das Gehäuse 13 eingesetzt ist. Die Einführrichtung 19 ist dabei quer zum Frischluftpfad 14 orientiert. In den Figuren 2 bis 5 ist das Gehäuse 13 nur rudimentär, nämlich nur im Bereich der Einführöffnung 18, dargestellt.

Gemäß Fig. 1 besitzt der Ladeluftkühler 12 einen äußeren Endbereich 20 und einen inneren Endbereich 21, die bezüglich der Einführrichtung 19 distal zueinander bzw. voneinander abgewandt angeordnet sind. Der innere Endbereich 21 geht beim Einsetzen des Ladeluftkühlers 12 in das Gehäuse 13 voraus und befindet sich im eingesetzten Zustand vollständig innerhalb des Gehäuses 13. Im Unterschied dazu bildet der äußere Endbereich 20 im eingesetzten Zustand des Ladeluftkühlers 12 einen Verschluss für die Einführöffnung 18. Zumindest eine vom inneren Endbereich 21 bzw. vom Frischluftpfad 14 abgewandte Stirnseite 22 des Ladeluftkühlers 12, die sich am äußeren Endbereich 20 befindet, verbleibt außerhalb des Gehäuses 13.

Wie sich Fig. 1 ferner entnehmen lässt, kann das Gehäuse 13 an einer der Einführöffnung 18 gegenüberliegenden Wand 23 Positionierelemente 24 aufweisen. Diese wirken im eingesetzten Zustand des Ladeluftkühlers 12 mit dem inneren Endbereich 21 zum Positionieren des Ladeluftkühlers 12 im Gehäuse 13 zusammen.

Wie sich insbesondere den Figuren 2 bis 5 entnehmen lässt, ist zur Fixierung des Ladeluftkühlers 12 am Gehäuse 13 im Bereich der Einführöffnung 18 eine Verrastung 25 vorgesehen, so dass der äußere Endbereich 20 des Ladeluftkühlers 12 im Bereich der Einführöffnung 18 mit dem Gehäuse 13 verrastet ist. Hierzu weist der Ladeluftkühler 12 wenigstens ein Rastelement 26 auf, während das Gehäuse 13 zumindest ein Gegenrastelement 27 aufweist, das komplementär zum jeweiligen Rastelement 26 ausgestaltet ist und mit diesem zusammenwirkt.

Zweckmäßig ist das jeweilige Rastelement 26 integral am Ladeluftkühler 12 ausgeformt. Beispielsweise ist der Ladeluftkühler 12 in herkömmlicher Weise aus mehreren Blechen zusammengebaut. An einem dem äußeren Endbereich 20 zugeordneten Blech kann dann das jeweilige Rastelement 26 durch entsprechende Umformung integral ausgebildet sein. Zweckmäßig ist auch das jeweilige Gegenrastelement 27 integral am Gehäuse 13 ausgeformt. Beim Gehäuse 13 handelt es sich bevorzugt um ein Kunststoffbauteil, das mittels Spritzgusstechnik hergestellt wird. Folglich lässt sich das jeweilige Gegenrastelement 27 dann besonders einfach beim Spritzformen integral am Gehäuse 13 ausbilden.

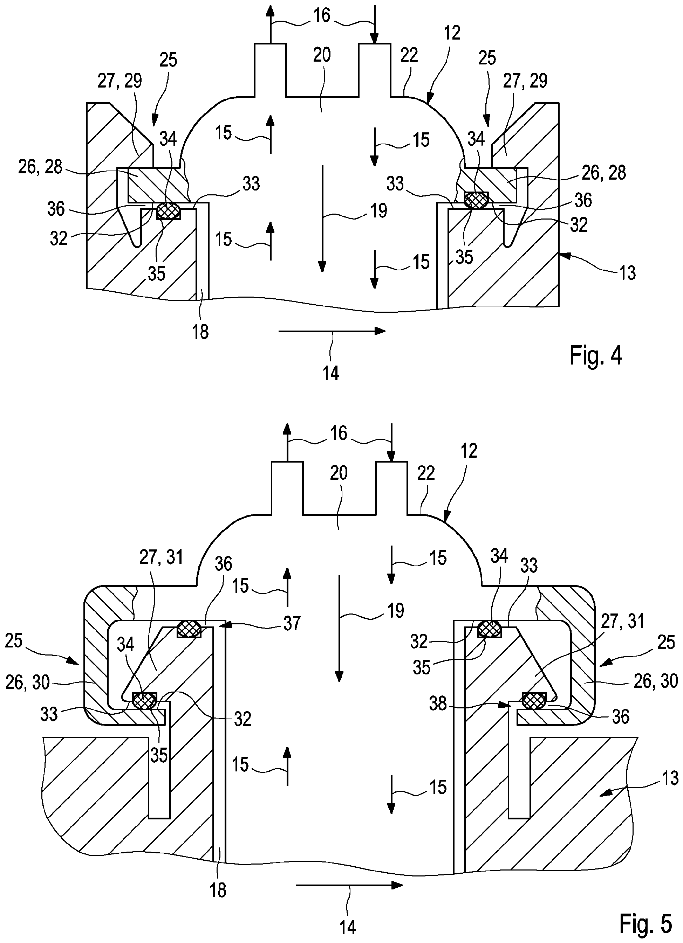

Bei dem in Figur 2 gezeigten Beispiel und der in Figur 4 gezeigten Ausführungsform ist das jeweilige Rastelement 26 durch eine Rastkontur 28 gebildet, während das zugehörige Gegenrastelement 27 durch einen Rasthaken 29 gebildet ist. Der jeweilige Rasthaken 29 steht dabei mit der jeweiligen Rastkontur 28 formschlüssig in Eingriff, wobei der jeweilige Rasthaken 29 die zugehörige Rastkontur 28 entgegen der Einführrichtung 19 hintergreift, so dass der Ladeluftkühler 12 im Gehäuse 13 entgegen der Einführrichtung 19, also in einer Auszugsrichtung, fixiert ist, insbesondere durch unmittelbaren körperlichen Kontakt.

In Fig. 2 und in Fig. 4 kann die Rastkontur 28 durch einen umlaufenden, quer zur Einführrichtung 19 abstehenden Flansch gebildet sein. Ebenso kann der äußere Bereich 20 des Ladeluftkühlers 12 mehrere quer zur Einführrichtung 19 abstehende Flanschabschnitte aufweisen, die jeweils eine Rastkontur 28 bilden. Zweckmäßig weist das Gehäuse 13 mehrere Rasthaken 29 auf, die entlang der Einführöffnung 18 verteilt angeordnet sind.

Bei dem in Figur 3 gezeigten Beispiel und der in Figur 5 gezeigten Ausführungsform ist das jeweilige Rastelement 26 durch einen Rasthaken 30 gebildet, während das jeweilige Gegenrastelement 27 durch eine Rastkontur 31 gebildet ist. Auch hier steht der jeweilige Rasthaken 30 mit der zugehörigen Rastkontur 31 in Eingriff. Zweckmäßig übergreift der jeweilige Rasthaken 30 auch hier die zugehörige Rastkontur 31 an einer von der Einführrichtung 19 abgewandten Seite, wodurch sich in der entgegengesetzt orientierten Auszugsrichtung ein Hinterschnitt mit einer formschlüssigen Sicherung des jeweiligen Rasthakens 30 an der zugehörigen Rastkontur 31 ausbildet. In den Beispielen der Fig. 3 und 5 ist der jeweilige Rasthaken 30 bügelförmig konzipiert, so dass er auch als Rastbügel bezeichnet werden kann. Ferner ist die zugehörige Rastkontur 31 an einem im Profil hakenförmigen Abschnitt des Gehäuses 13 ausgeformt, so dass auch die Rastkontur 31 hier grundsätzlich als Rasthaken 31 bezeichnet werden kann.

Wie sich den Figuren 2 bis 5 ferner entnehmen lässt, weist der äußere Endbereich 20 zumindest einen umlaufenden Kontaktbereich 32 auf. Passend dazu besitzt das Gehäuse 13 wenigstens einen um die Einführöffnung 18 umlaufenden Anlagebereich 33.

Bei den Beispielen der Fig. 2 und 3 kommt beim Einführen des Ladeluftkühlers 12 in das Gehäuse 13 der Kontaktbereich 32 unmittelbar am Anlagebereich 33 zur Anlage, wenn die vorgesehene Endlage zwischen Ladeluftkühler 12 und Gehäuse 13 erreicht wird. In dieser Endlage kommt es dann auch zum Verrasten innerhalb der Verrastung 25.

Im Unterschied dazu zeigen die Fig. 4 und 5 erfindungsgemäße Ausführungsformen, bei denen die Endlage zwischen Gehäuse 13 und Ladeluftkühler 12 mit dem Verrasten innerhalb der Verrastung 25 erreicht wird, ohne dass der Ladeluftkühler 12 dabei in der Einführrichtung 19 mit dem Gehäuse 13 in unmittelbaren Kontakt kommt. Erkennbar ist dort in der Einführrichtung zwischen wenigstens einem solchen Kontaktbereich 32 und dem zugehörigen Anlagebereich 33 ein Abstand bzw. eine Lücke 36 ausgebildet.

Entsprechend den Fig. 2 bis 5 ist im Kontaktbereich 32 bzw. im Anlagebereich 33 zweckmäßig zumindest eine Dichtung 34 angeordnet, die um die Einführöffnung 18 umläuft, wodurch zwischen Ladeluftkühler 12 und Gehäuse 13 im Bereich der Einführöffnung 18 eine hinreichende Luftdichtigkeit zur Vermeidung von Leckagen realisierbar ist. Die jeweilige Dichtung 34 kann dabei in eine bezüglich der Einführöffnung 18 umlaufende Dichtungsnut 35 eingesetzt sein, was eine definierte Positionierung der Dichtung 34 erleichtert. Hinsichtlich der Anordnung derartiger Dichtungsnuten 35 zeigen die Fig. 2 und 4 einerseits und die Fig. 3 und 5 andererseits jeweils mehrere Ausführungsbeispiele. So zeigen die Fig. 2 und 4 links eine erste Anordnung und rechts eine zweite Anordnung, die nur alternativ realisierbar sind. Die Fig. 3 und 5 zeigen dagegen oben eine erste Anordnung und unten eine zweite Anordnung, die alternativ und kumulativ realisierbar sind. Dementsprechend kann diese Dichtungsnut 35 gemäß den Fig. 2 und 4 links und gemäß den Fig. 3 und 5 oben im Anlagebereich 33 ausgebildet sein. Gemäß den Fig. 2 und 4 rechts kann die Dichtungsnut 35 auch im Kontaktbereich 32 vorgesehen sein. Fig. 3 und 5 unten zeigen jeweils eine Variante, bei der zwei Dichtungsnuten 35 vorgesehen sind, nämlich sowohl im Kontaktbereich 32 als auch im Anlagebereich 33, die parallel zur Einführrichtung 19 zueinander fluchten. Wie bereits vorstehend erläutert, unterscheiden sich die Varianten der Fig. 4 und 5 von den Ausführungsformen der Fig. 2 und 3 nur dadurch, dass in der Einführrichtung 19 zwischen wenigstens einem solchen Kontaktbereich 32 und dem zugehörigen Anlagebereich 33 eine Lücke 36 ausgebildet ist. Im Beispiel der Fig. 4 ist nur eine Paarung aus Kontaktbereich 32 und Anlagebereich 33 vorgesehen, so dass auch nur eine Lücke 36 vorgesehen ist. Diese Lücke 36 ist dabei von der jeweiligen Dichtung 34 überbrückt, die dieser Paarung zugeordnet ist. Die Dichtung 34 besteht aus einem elastischen Dichtungsmaterial, so dass sie eine elastische Abstützung des Ladeluftkühlers 12 am Gehäuse 13 ermöglicht. Im Beispiel der Fig. 4 ist der Ladeluftkühler 12 über diese Dichtung 34 nur in der Einführrichtung 19 elastisch am Gehäuse 13 abgestützt.

Bei der in Fig. 5 gezeigten Ausführungsform sind dagegen zwei derartige Paarungen aus Kontaktbereich 32 und Anlagebereich 33 vorgesehen, nämlich ein in Fig. 5 weiter oben angeordnetes erstes Paar 37 aus Kontaktbereich 32 und Anlagebereich 33 sowie ein in Fig. 5 weiter unten gezeigtes zweites Paar 38 aus Kontaktbereich 32 und Anlagebereich 33. Die beiden Paare 37, 38 aus Kontaktbereich 32 und Anlagebereich 33 sind dabei parallel zur Einführrichtung 19 voneinander beabstandet. Ferner ist in diesem Fall jedem Paar 37, 38 aus Kontaktbereich 32 und Anlagebereich 33 jeweils eine solche Dichtung 34 zugeordnet, nämlich eine dem ersten Paar 37 zugeordnete erste Dichtung 34 und eine dem zweiten Paar 38 zugeordnete zweite Dichtung 34. Folglich ist in diesem Beispiel der Ladeluftkühler 12 über die erste Dichtung 34 in der Einführrichtung 19 und über die zweite Dichtung 34 entgegen der Einführrichtung 19, also in der Auszugsrichtung elastisch am Gehäuse 13 abgestützt.

## Patentansprüche

1. Frischluftanlage zur Versorgung von Brennräumen (3) einer aufgeladenen Brennkraftmaschine (1) mit Frischluft,
- mit einem Gehäuse (13), durch das ein Frischluftpfad (14) hindurchgeführt ist und das eine seitliche Einführöffnung (18) aufweist,
- mit einem Ladeluftkühler (12), der durch die Einführöffnung (18) in einer Einführrichtung (19) so in das Gehäuse (13) eingeführt ist, dass der Frischluftpfad (14) durch den Ladeluftkühler (12) hindurchführt,
- wobei ein äußerer Endbereich (20) des Ladeluftkühlers (12) die Einführöffnung (18) verschließt,
- wobei der äußere Endbereich (20) des Ladeluftkühlers (12) mit dem Gehäuse (13) verrastet ist,
- wobei der äußere Endbereich (20) zumindest einen umlaufenden Kontaktbereich (32) aufweist, der einem um die Einführöffnung (18) umlaufenden Anlagebereich (33) parallel zur Einführrichtung (19) gegenüber liegt,
- wobei zwischen dem Gehäuse (13) und dem äußeren Endbereich (20) wenigstens eine um die Einführöffnung (18) umlaufende Dichtung (34) angeordnet ist,
**dadurch gekennzeichnet,**
**dass** in der Einführrichtung (19) zwischen wenigstens einem solchen Kontaktbereich (32) und dem zugehörigen Anlagebereich (33) eine Lücke (36) ausgebildet ist, die Relativbewegungen zwischen Ladeluftkühler (12) und Gehäuse (13) zulässt und die von der jeweiligen Dichtung (34) überbrückt ist, so dass diese Relativbewegungen von der jeweiligen Dichtung (34) elastisch aufnehmbar sind.

2. Frischluftanlage nach Anspruch 1,
**dadurch gekennzeichnet,**
**dass** der Ladeluftkühler (12) Rastelemente (26) aufweist, die mit dazu komplementären Gegenrastelementen (27) zusammenwirken, die das Gehäuse (13) aufweist.

3. Frischluftanlage nach Anspruch 2,
**dadurch gekennzeichnet,**
**dass** die Rastelemente (26) integral am Ladeluftkühler (12) ausgeformt sind.

4. Frischluftanlage nach Anspruch 2 oder 3,
**dadurch gekennzeichnet,**
**dass** die Gegenrastelemente (27) integral am Gehäuse (13) ausgeformt sind.

5. Frischluftanlage nach einem der Ansprüche 2 bis 4,
**dadurch gekennzeichnet,**
**dass** das jeweilige Rastelement (26) durch eine Rastkontur (28) gebildet ist, während das jeweilige Gegenrastelement (27) durch einen Rasthaken (29) gebildet ist, der mit der zugehörigen Rastkontur (28) in Eingriff steht.

6. Frischluftanlage nach einem der Ansprüche 2 bis 4,
**dadurch gekennzeichnet,**
**dass** das jeweilige Rastelement (26) durch einen Rasthaken (30) gebildet ist, während das jeweilige Gegenrastelement (27) durch eine Rastkontur (31) gebildet ist, mit der der jeweilige Rasthaken (30) in Eingriff steht.

7. Frischluftanlage nach einem der Ansprüche 1 bis 6,
**dadurch gekennzeichnet,**
**dass** zumindest ein solcher Kontaktbereich (32) unmittelbar am zugehörigen Anlagebereich (33) anliegt.

8. Frischluftanlage nach einem der Ansprüche 1 bis 7,
**dadurch gekennzeichnet,**
**dass** der Ladeluftkühler (12) über eine solche Dichtung (34) nur in der Einführrichtung (19) elastisch am Gehäuse (13) abgestützt ist.

9. Frischluftanlage nach einem der Ansprüche 1 bis 7,
**dadurch gekennzeichnet,**
**dass** der Ladeluftkühler (12) über eine erste solche Dichtung (34) in der Einführrichtung (19) und über eine zweite solche Dichtung (34) entgegen der Einführrichtung (19) elastisch am Gehäuse (13) abgestützt ist.

10. Frischluftanlage nach Anspruch 9,
**dadurch gekennzeichnet,**
**dass** die erste Dichtung (34) in einem ersten Paar (37) aus Kontaktbereich (32) und Anlagebereich (33) angeordnet ist, während die zweite Dichtung (34) in einem vom ersten Paar (37) parallel zur Einführrichtung (19) beabstandeten zweiten Paar (38) aus Kontaktbereich (32) und Anlagebereich (33) angeordnet ist.

11. Frischluftanlage nach einem der Ansprüche 1 bis 10,
**dadurch gekennzeichnet,**
**dass** die jeweilige Dichtung (34) in eine bezüglich der Einführöffnung (18) umlaufende Dichtungsnut (35) eingesetzt ist, die im Kontaktbereich (32) und/oder im Anlagebereich (33) ausgebildet ist.

## Claims

1. An air supply system for supplying the combustion chambers (3) of a supercharged internal combustion engine (1) with fresh air,
- with a housing (13), through which a fresh air path (14) runs and which has a lateral introduction opening (18),
- with a charge-air cooler (12) which is introduced into the housing (13) through the introduction opening (18) in an introduction direction (19) such that the fresh air path (14) runs through the charge-air cooler (12),
- wherein an outer end region (20) of the charge-air cooler (12) closes the introduction opening (18),
- wherein the outer end region (20) of the charge-air cooler (12) is locked with the housing (13)
- wherein the outer end region (20) has at least one circumferential contact region (32), which lies opposite an abutment region (33), running around the introduction opening (18), parallel to the introduction direction (19),
- wherein between the housing (13) and the outer end region (20) at least one seal (34) is arranged, running around the introduction opening (18),
**characterized in that**
a gap (36) is formed in the introduction direction (19) between at least one such contact region (32) and the associated abutment region (33), which gap allows relative movements between charge-air cooler (12) and housing (13) and is bridged by the respective seal (34), such that said relative movements can be received elastically by the respective seal (34).

2. The air supply system according to Claim 1,
**characterized in that**
the charge-air cooler (12) has detent elements (26), which cooperate with counter-detent elements (27) complementary thereto, which the housing (13) has.

3. The air supply system according to Claim 2,
**characterized in that**
the detent elements (26) are formed integrally on the charge-air cooler (12).

4. The air supply system according to Claim 2 or 3,
**characterized in that**
the counter-detent elements (27) are formed integrally on the housing (13).

5. The air supply system according to one of Claims 2 to 4,
**characterized in that**
the respective detent element (26) is formed by a detent contour (28), whilst the respective counter-detent element (27) is formed by a detent hook (29) which is in engagement with the associated detent contour (28).

6. The air supply system according to one of Claims 2 to 4,
**characterized in that**
the respective detent element (26) is formed by a detent hook (30), whilst the respective counter-detent element (27) is formed by a detent contour (31), with which the respective detent hook (30) is in engagement.

7. The air supply system according to one of Claims 1 to 6,
**characterized in that**
at least one such contact region (32) lies directly against the associated abutment region (33).

8. The air supply system according to one of Claims 1 to 7,
**characterized in that**
the charge-air cooler (12) is supported elastically on the housing (13) via such a seal (34) only in the introduction direction (19).

9. The air supply system according to one of Claims 1 to 7,
**characterized in that**
the charge-air cooler (12) is supported elastically on the housing (13) via a first such seal (34) in the introduction direction (19) and via a second such seal (34) contrary to the introduction direction (19).

10. The air supply system according to Claim 9,
**characterized in that**
the first seal (34) is arranged in a first pair (37) of contact region (32) and abutment region (33), whilst the second seal (34) is arranged in a second pair (38) of contact region (32) and abutment region (33) spaced apart from the first pair (37) parallel to the introduction direction (19).

11. The air supply system according to one of Claims 1 to 10,
**characterized in that**
the respective seal (34) is inserted into a seal groove (35) which is circumferential with respect to the introduction opening (18), which seal groove is formed in the contact region (32) and/or in the abutment region (33).

## Revendications

1. Installation d'air frais pour l'alimentation de chambres de combustion (3) d'un moteur à combustion interne (1) suralimenté en air frais,
- avec un boîtier (13) au travers duquel une voie d'air frais (14) est passée et qui présente une ouverture d'introduction (18) latérale,
- avec un refroidisseur d'air de suralimentation (12) qui est introduit par l'ouverture d'introduction (18) dans un sens d'introduction (19) dans le boîtier (13) de sorte que la voie d'air frais (14) passe au travers du refroidisseur d'air de suralimentation (12),
- dans laquelle une zone d'extrémité extérieure (20) du refroidisseur d'air de suralimentation (12) ferme l'ouverture d'introduction (18),
- dans laquelle la zone d'extrémité extérieure (20) du refroidisseur d'air de suralimentation (12) est encliquetée avec le boîtier (13),
- dans laquelle la zone d'extrémité extérieure (20) présente au moins une zone de contact tournante (32) qui fait face à une zone d'appui (33) tournant autour de l'ouverture d'introduction (18) parallèlement au sens d'introduction (19),
- dans laquelle entre le boîtier (13) et la zone d'extrémité extérieure (20) au moins un joint d'étanchéité (34) tournant autour de l'ouverture d'introduction (18) est agencé,
**caractérisée en ce que**,
dans le sens d'introduction (19) entre au moins une telle zone de contact (32) et la zone d'appui (33) afférente, un vide (36) est réalisé, lequel permet des mouvements relatifs entre le refroidisseur d'air de suralimentation (12) et le boîtier (13) et lequel est enjambé par le joint d'étanchéité respectif (34) de sorte que ces mouvements relatifs puissent être reçus élastiquement par le joint d'étanchéité (34) respectif.

2. Installation d'air frais selon la revendication 1,
**caractérisée en ce que**
le refroidisseur d'air de suralimentation (12) présente des éléments d'encliquetage (26) qui coagissent avec des éléments d'encliquetage antagonistes (27) complémentaires à ceux-ci que présente le boîtier (13).

3. Installation d'air frais selon la revendication 2,
**caractérisée en ce que**
les éléments d'encliquetage (26) sont intégralement formés sur le refroidisseur d'air de suralimentation (12).

4. Installation d'air frais selon la revendication 2 ou 3,
**caractérisée en ce que**
les éléments d'encliquetage antagonistes (27) sont intégralement formés sur le boîtier (13).

5. Installation d'air frais selon l'une quelconque des revendications 2 à 4,
**caractérisée en ce que**
l'élément d'encliquetage (26) respectif est formé par un contour d'encliquetage (28) alors que l'élément d'encliquetage antagoniste (27) respectif est formé par un crochet d'encliquetage (29) qui est en prise avec le contour d'encliquetage (28) afférent.

6. Installation d'air frais selon l'une quelconque des revendications 2 à 4,
**caractérisée en ce que**
l'élément d'encliquetage (26) respectif est formé par un crochet d'encliquetage (30) alors que l'élément d'encliquetage antagoniste (27) respectif est formé par un contour d'encliquetage (31) avec lequel le crochet d'encliquetage (30) respectif est en prise.

7. Installation d'air frais selon l'une quelconque des revendications 1 à 6,
**caractérisée en ce que**
au moins une telle zone de contact (32) repose directement contre la zone d'appui (33) afférente.

8. Installation d'air frais selon l'une quelconque des revendications 1 à 7,
**caractérisée en ce que**
le refroidisseur d'air de suralimentation (12) est en appui par le biais d'un tel joint d'étanchéité (34) seulement dans le sens d'introduction (19) élastiquement contre le boîtier (13).

9. Installation d'air frais selon l'une quelconque des revendications 1 à 7,
**caractérisée en ce que**
le refroidisseur d'air de suralimentation (12) est en appui par le biais d'un premier tel joint d'étanchéité (34) dans le sens d'introduction (19) et par le biais d'un second tel joint d'étanchéité (34) dans le sens inverse au sens d'introduction (19) élastiquement contre le boîtier (13).

10. Installation d'air frais selon la revendication 9,
**caractérisée en ce que**
le premier joint d'étanchéité (34) est agencé dans une première paire (37) de zone de contact (32) et de zone d'appui (33), alors que le second joint d'étanchéité (34) est agencé dans une seconde paire (38) espacée de la première paire (37) parallèlement au sens d'introduction (19) de zone de contact (32) et de zone d'appui (33).

11. Installation d'air frais selon l'une quelconque des revendications 1 à 10,
**caractérisée en ce que**
le joint d'étanchéité respectif (34) est inséré dans une rainure de joint d'étanchéité (35) tournante par rapport à l'ouverture d'introduction (18) qui est réalisée dans la zone de contact (32) et/ou dans la zone d'appui (33).
